# EUROPÄISCHE PATENTSCHRIFT

(11) **EP 4 086 684 B1**
(45) Veröffentlichungstag und Bekanntmachung des Hinweises auf die Patenterteilung: **09.10.2024**
(21) Anmeldenummer: 21172759.9
(22) Anmeldetag: 07.05.2021
(51) Int. Cl.: G02B 7/00, G02B 7/04, G02B 21/00, G02B 21/24, G02B 21/26

(54) **OPTISCHES SYSTEM UND VERFAHREN ZUM BETREIBEN EINES OPTISCHEN SYSTEMS**
OPTICAL SYSTEM AND METHOD FOR OPERATING AN OPTICAL SYSTEM
SYSTÈME OPTIQUE ET PROCÉDÉ DE FONCTIONNEMENT D'UN SYSTÈME OPTIQUE

(43) Veröffentlichungstag der Anmeldung: 09.11.2022
(73) Patentinhaber: Carl Zeiss Meditec AG, 07745 Jena (DE)
(72) Erfinder: Krieg, Natalie, 73434 Aalen (DE); Müller, Andrè, 89551 Königsbronn (DE)
(74) Vertreter: Ramrath, Lukas

(56) Entgegenhaltungen:
- WO-A1-2019/123965
- DE-A1- 19 711 372
- US-A- 6 118 242
- US-A1- 2016 373 626

## Beschreibung

Die Erfindung betrifft ein optisches System und ein Verfahren zum Betreiben eines optischen Systems.

Bilderfassungseinrichtungen umfassen in der Regel neben einem Bildsensor ein optisches System, welches beispielsweise eine oder mehrere Linse(n) umfasst. Durch die Eigenschaften der optischen Elemente können beispielsweise Parameter wie eine Brennweite, aber auch ein Erfassungswinkel eines Erfassungsbereichs (Öffnungswinkel) festgelegt werden. Um solche Parameter zu verändern ist es möglich, dass eine Eigenschaft oder eine Lage eines optischen Elements verändert wird. Bekannt ist z.B., die Lage von einer Linse relativ zum Bildsensor zu verändern, um die Lage eines Brennpunkts, aber auch den erläuterten Erfassungswinkel zu verändern. Insbesondere kann durch eine gezielte Lageänderung mindestens eines optischen Elements ein gewünschter Erfassungswinkel eingestellt werden. Die hochgenaue Einstellung der Lage des optischen Elements erfordert jedoch hochpräzise gefertigte Bauteile, einen hohen Montage- und Justageaufwand und einen Betrieb mit minimalem Verschleiß, der ebenfalls aufwändig und kostenintensiv ist.

Die DE 10 2008 040 218 A1 offenbart ein Verfahren zum Betrieb einer optischen Einrichtung mit einem drehbaren optischen Element, insbesondere einer Projektionsbelichtungsanlage für die Mikrolithographie. Die Druckschrift offenbart Lagermittel für ein drehbares optisches Element, insbesondere eine Dreipunktlagerung. Die in der DE 10 2008 040 218 A1 offenbarten Lagerelemente dienen zur statischen Lagerung vor und nach einer Drehung.

Weiter bekannt ist die EP 1 322 909 B1. Diese offenbart ein Koordinatenmessgerät mit einer Aufnahme zur automatisch auswechselbaren Befestigung einer Sensorik und ein Dreipunktlager.

Für bestimmte Anwendungen ist keine hochpräzise Einstellung von Parametern eines optischen Systems auf eine Vielzahl von Werten erforderlich. So kann es beispielsweise ausreichend sein, nur einen minimalen und einen maximalen Erfassungswinkel mit einer gewünschten Wiederholgenauigkeit einzustellen, wobei die Einstellung von weiteren Winkeln nicht mit der gleichen Wiederholgenauigkeit erforderlich ist. Dies ist insbesondere aber nicht ausschließlich möglich bei der Einstellung von Erfassungswinkeln einer Bilderfassungseinrichtung zur optischen Lagebestimmung, insbesondere zur sogenannten monoskopischen Lageerfassung. Eine solche Bilderfassungseinrichtung dient zur Erzeugung von Abbildern eines Markers oder Targets, wobei bildbasiert, insbesondere basierend auf einem einzigen Abbild, eine Raumlage, also eine Position und/oder Orientierung, des Targets bestimmt werden kann. Ja nach Abstand des Targets von der Bilderfassungseinrichtung kann es zur Erzeugung von Abbildern mit ausreichend hoher Auflösung gewünscht sein, verschiedene Erfassungswinkel einzustellen.

Die US 2016/373626 A1 offenbart Techniken und Vorrichtungen, die einen VCMbetätigten Autofokus ohne Neigung ermöglichen.

Die DE 197 11 372 A1 offenbart eine Linsenmontageanordnung.

Die WO 2019/123965 A1 offenbart einen Linsentubus, insbesondere einen Linsentubus mit einer durch einen Linearmotor angetriebenen Linse.

Die US 6,118,242 A1 offenbart eine Wegpunkt-Begrenzungsschaltung mit einem Gleichstrommotor für ein Objektiv und insbesondere eine Schaltung, die für Treiber wie etwa Zoom- oder Fokussierobjektive oder zum Ansteuern einer Blende verwendet wird.

Es stellt sich daher das technische Problem, ein optisches System und ein Verfahren zum Betreiben des optischen Systems zu schaffen, die eine einfache und wiederholgenaue Einstellung von mindestens zwei, insbesondere genau zwei, Erfassungswinkeln und gegebenenfalls weiteren Parametern des optischen Systems ermöglichen.

Die Lösung des technischen Problems ergibt sich durch die Gegenstände mit den Merkmalen der unabhängigen Ansprüche. Weitere vorteilhafte Ausgestaltungen der Erfindung ergeben sich durch die Unteransprüche.

Vorgeschlagen wird ein optisches System, insbesondere ein optisches System einer Bilderfassungseinrichtung. Das optische System umfasst mindestens ein optisches Element, insbesondere mindestens eine Linse. Durch das optische System können Strahlen auf einen Bildsensor der Bilderfassungseinrichtung geführt werden. Durch Eigenschaften der Elemente des optischen Systems wird ein Erfassungswinkel eines Erfassungsbereichs festgelegt, wobei der Erfassungsbereich einen räumlichen Bereich bezeichnet, in dem Objekte durch den Bildsensor abgebildet werden können. Das optische System kann, wie nachfolgend noch näher erläutert, insbesondere derart ausgebildet sein, dass der Erfassungswinkel veränderbar ist. Alternativ oder kumulativ zum Erfassungswinkel kann durch das optische System auch ein weiterer Parameter des optischen Systems, beispielsweise eine Brennweite, festgelegt sein. Auch dieser kann veränderbar sein.

Das optische System umfasst mindestens einen Träger mit mindestens einem optischen Element, insbesondere mindestens einer Linse. Vorzugsweise umfasst der Träger ein sogenanntes Kittglied, welches aus mindestens zwei optischen Linsen bestehen kann. Ein solches Kittglied kann beispielsweise als Meniskuslinse oder als Konvex-Konkav-Linse ausgebildet sein. Das optische Element kann am Träger befestigt sein, insbesondere ortsfest relativ zum Träger. Es ist auch vorstellbar, dass der Träger das optische Element ausbildet.

Weiter umfasst das optische System ein Bewegungslagerelement zur Lagerung des Trägers während einer Bewegung. Somit ist der Träger beweglich gelagert. Das Bewegungslagerelement kann eine Fluidlagerung, beispielsweise eine Luft- oder Gaslagerung, eine magnetische Lagerung, eine durch Wälz-, Kugel-, Gleitlager oder Festkörpergelenke bereitgestellte Lagerung des Trägers ermöglichen. Vorzugsweise ist das Bewegungslagerelement ein Element zur Gleitlagerung. Das Bewegungslagerungselement kann beispielsweise von einem Gehäuse oder Gehäuseabschnitt des optischen Systems ausgebildet werden. Hierbei können Wandflächen des Gehäuses Lagerflächen bilden, insbesondere für die genannte Gleitlagerung, wobei ein Bewegungsraum für den Träger von den Wandflächen zumindest teilweise umfasst wird. Lagerflächen des Gehäuses können plan oder konvex ausgebildet sein, insbesondere hin zum Träger gewölbt. Auch der Träger kann Lagerflächen oderabschnitte ausbilden, z.B. Seitenrandflächen eines quaderförmigen Trägers. Auch diese können plan oder konvex, insbesondere hin zum Bewegungslagerelement gekrümmt, ausgebildet sein. Das Bewegungslagerelement kann insbesondere eine schwimmende Lagerung des Trägers während der Bewegung ermöglichen. Konvex ausgebildete Lagerflächen reduzieren in vorteilhafter Weise die Größe der aneinanderreibenden Flächen.

Auch kann das optische System ein Führungselement zur Führung der Bewegung umfassen oder ausbilden. Dieses kann durch das Bewegungslagerelement oder einen Teil davon ausgebildet sein. Das Führungselement kann z.B. zur Profilschienenführung oder zur Käfigführung ausgebildet sein. Auch kann das Führungselement eine Kurvenscheibe umfassen oder als Kurvenscheibe ausgebildet sein, die den Träger oder ein Kopplungselement, z.B. ein Federelement, betätigt.

Weiter umfasst das optische System ein erstes Lagerelement und ein weiteres Lagerelement zur statischen Lagerung des Trägers. Diese Lagerelemente dienen also nicht zur Lagerung des Trägers während der Bewegung, sondern in einem Stillstand und sind daher vom Bewegungslagerelement verschieden. Weiter umfasst der Träger korrespondierende Lagerelemente zur statischen Lagerung. Weiter kann das optische System mindestens eine Antriebseinrichtung zur Erzeugung einer Antriebskraft für die Bewegung des Trägers umfassen. Die Antriebseinrichtung kann zur Übertragung der Antriebskraft über mindestens ein Kopplungselement mechanisch mit dem Träger gekoppelt sein.

Weiter umfasst das optische System ein erstes und ein weiteres Endanschlagelement, wobei der Träger beweglich, insbesondere linearbeweglich, zwischen den Endanschlagelementen gelagert ist. Die Endanschlagelemente begrenzen mit anderen Worten die Bewegung des Trägers. Weiter weist das erste Endanschlagelement das erste Lagerelement zur statischen Lagerung und das weitere Endanschlagelement das weitere Lagerelement zur statischen Lagerung auf oder bildet dieses aus. Weiter legen die Lagerelemente die Anschlaglagen des Trägers und somit auch des am Träger befestigten oder vom Träger ausgebildeten optischen Elements wiederholgenau, also mit einer vorbestimmten Wiederholgenauigkeit, fest. Mit anderen Worten kann also der Träger durch eine Bewegung in eine Anschlaglage bewegt werden, wobei er in der Anschlaglage durch das erste oder das weitere Lagerelement statisch gelagert wird. Insbesondere kann in einer Anschlaglage das erste oder das weitere Lagerelement das entsprechend korrespondierende Lagerelement des Trägers mechanisch kontaktieren.

Die Anschlaglage bezeichnet hierbei eine räumliche Position oder eine räumliche Orientierung des Trägers. Diese kann insbesondere in einem Referenzkoordinatensystem gegeben sein. Hierbei kann eine vertikale Achse (z-Achse) dieses Referenzkoordinatensystems parallel zur Linearbewegungsachse einer Linearbewegung des Trägers oder aber parallel zur Gravitationskraftrichtung orientiert sein. Eine Längs- und Querachse (x-, y-Achse) können senkrecht zueinander und senkrecht zur Vertikalachse orientiert sein. Ein Mittelpunkt des Referenzkoordinatensystems kann auf der Trajektorie in der Mitte zwischen den beiden Anschlaglagen angeordnet sein.

Die Wiederholgenauigkeit kann insbesondere eine sogenannte unidirektionale Wiederholgenauigkeit sein, da der Träger nur unidirektional in eine Anschlaglage bewegt werden kann. Die Wiederholgenauigkeit repräsentiert die Größe einer maximalen Abweichung zwischen den Anschlaglagen, die sich beim mehrfachen Bewegen des Trägers in die Anschlaglage einstellen. Diese unidirektionale Wiederholgenauigkeit kann beispielsweise als Standardabweichung der Anschlaglagenabweichungen bei einer Vielzahl von, beispielsweise bei mehr als 100, wiederholten Positionierungen in der Anschlaglage bestimmt werden. Vorzugsweise ist die Wiederholgenauigkeit kleiner als oder gleich 5 µm bzw. 5 Winkelsekunden, besonders bevorzugt kleiner als 2 µm bzw. 2 Winkelsekunden. Mit anderen Worten wird durch die Ausbildung des optischen Systems gewährleistet, dass der Träger und somit auch das optische Element bei jeder Bewegung in die Anschlaglage die gleiche Position und/oder Orientierung einnimmt. Insbesondere können die Lagerelemente derart angeordnet und/oder ausgebildet sein, dass eine Selbstzentrierung des Trägers bei der Bewegung in eine Anschlaglage erfolgt.

Hieraus resultiert auch die gleiche Größe des durch das optische System festgelegten Erfassungswinkels und gleiche räumliche Anordnung des Erfassungsbereichs. Durch das optische System werden somit zwei, insbesondere genau zwei, Zustände festgelegt, in denen der Erfassungswinkel und die räumliche Anordnung des Erfassungsbereichs immer gleich sind, wobei dies natürlich die Abweichungen innerhalb der Wiederholgenauigkeit berücksichtigt. Dies ist insbesondere für Anwendungen bei der optischen Lageerfassung vorteilhaft, da zur Bereitstellung einer ausreichenden Auflösung auch bei verschiedenen Abständen eines Targets verschiedene Erfassungswinkel/-bereiche eingestellt werden können, wobei Ungenauigkeiten bei der Einstellung die Genauigkeit der Lageerfassung möglichst wenig beeinflussen. Das optische System kann auch eine Bilderfassungseinrichtung, insbesondere mit einem Bildsensor, umfassen.

In einer weiteren Ausführungsform ist die durch das Bewegungslagerelement festgelegte bzw. bereitgestellte Wiederholgenauigkeit einer Bewegungslage des optischen Elements geringer als die Wiederholgenauigkeit in einer Anschlaglage. Die Bewegungslage kann insbesondere eine Lage des Trägers zwischen den beiden Anschlaglagen sein. Dass die Genauigkeit geringer ist, kann bedeuten, dass der Wert der Wiederholgenauigkeit größer ist als der Wert der Wiederholgenauigkeit in einer Anschlaglage, beispielsweise um das Zehnfache. Mit anderen Worten ist eine Bewegungslage des Trägers durch das Bewegungslageelement nicht in der gleichen Weise wiederholgenau festgelegt wie eine Anschlaglage durch das erste und das weitere Lagerelement. Insbesondere kann die schwimmende Lagerung des Trägers durch das Bewegungslagerelement zwar eine ausreichende Bewegungsführung ermöglichen, jedoch ist das Spiel bei Positionierung in einer Lage größer als bei der statischen Lagerung durch die Lagerelemente.

Hierdurch ergibt sich in vorteilhafter Weise eine einfache und kostengünstige Ausbildung des optischen Systems, insbesondere da keine hochpräzise Fertigung des Bewegungslagerelements und gegebenenfalls der durch dieses Element bereitgestellten Führungselemente erfolgen muss. Ferner ist es auch nicht erforderlich, verschleißarme Materialien zur Herstellung des Bewegungslagerelements zu verwenden, da die Auswirkung von Verschleiß auf die Wiederholgenauigkeit einer Bewegungslage weniger relevant ist als auf die Wiederholgenauigkeit der Positionierung in einer Anschlaglage. Ferner ergibt sich eine vereinfachte Herstellung auch deshalb, weil bei einer Montage keine hochpräzise Anordnung von Teilelementen des Bewegungslagerelements zueinander notwendig ist. Ebenfalls ergibt sich kein oder ein nur geringer Aufwand für eine Schmierung, um die Bewegung zu ermöglichen. Insgesamt resultiert dies in geringen Fertigungs- und Betriebskosten.

In einer weiteren Ausführungsform umfasst der Träger eine Trägerplatte oder bildet diese aus, wobei zum ersten Lagerelement korrespondierende Lagerelemente des Trägers auf einer ersten Seite der Trägerplatte und zum weiteren Lagerelement korrespondierende Lagerelemente des Trägers auf einer weiteren Seite der Trägerplatte angeordnet sind. Die erste Seite kann hierbei auch eine Oberseite und die weitere Seite eine Unterseite der Trägerplatte bezeichnen. Richtungsangaben wie "oben", "unten" können sich hierbei auf eine Richtung der vorhergehend erläuterten Vertikalachse beziehen, die von unten nach oben orientiert ist, wenn sie vom weiteren zum ersten Lagerelement orientiert ist. Hierdurch ergibt sich in vorteilhafter Weise eine einfache Ausbildung des Trägers, der durch beide Lagerelemente wiederholgenau statisch gelagert werden kann.

In einer bevorzugten Ausführungsform ist mindestens eines der Lagerelemente zur statischen Lagerung ein Element eines Dreipunktlagers. Dies kann bedeuten, dass das erste und/oder das weitere Lagerelement - in Wechselwirkung mit den korrespondierenden Lagerelementen des Trägers - eine Dreipunktlagerung des Trägers ermöglicht/ermöglichen. Eine Dreipunktlagerung ist dem Fachmann hierbei bekannt, beispielsweise aus der einleitend bereits angeführten DE 10 2008 040 218 A1. Eine Dreipunktlagerung ermöglicht eine statisch bestimmte Lagerung des Trägers in der Anschlaglage. Insbesondere kann das erste Lagerelement und das weitere Lagerelement somit in Wechselwirkung mit den jeweils korrespondierenden Lagerelementen des Trägers eine statisch bestimmte Lagerung des Trägers ermöglichen. Eine Dreipunktlagerung kann beispielsweise bereitgestellt werden, indem ein Lagerelement zur statischen Lagerung oder das korrespondierende Lagerelement des Trägers drei Pfannenelemente oder Pfannenabschnitte aufweist oder ausbildet, wobei das verbleibende Lagerelement drei korrespondierende Kopfelemente oder Kopfabschnitte aufweist oder ausbildet. Ein Pfannenabschnitt kann beispielsweise durch ein Kugel- oder Teilkugel-Paar, ein Walzen- oder Teilwalzen-Paar, ein Zylinder- oder Teilzylinder-Paar, als Nut, insbesondere als im Querschnitt dreieck- oder trapezförmige Nut, als kegel- oder kegelstumpfförmige Vertiefung oder in einer dem Fachmann weiter bekannten Art und Weise ausgebildet sein. Ein Kopfelement kann beispielsweise als Kugel, als Teilkugel, als Walze, als Teilwalze, als Zylinder oder Teilzylinder ausgebildet sein. Die Elemente können hierbei aus einem hochfesten Werkstoff, insbesondere aus gehärtetem Stahl, ausgebildet sein. Zur statischen Lagerung wird das Kopfelement bzw. der Kopfabschnitt in die von dem Pfannenabschnitt oder Pfannenelement ausgebildete Aufnahmeausnehmung hineinbewegt. Durch die erläuterte Ausbildung wird hierbei sichergestellt, dass beim Anschlag der Elemente aneinander immer die gleiche Position und/oder Orientierung des Trägers eingestellt ist. Selbstverständlich ist es vorstellbar, dass auch andersartig ausgebildete Lagerelemente zur Bereitstellung der wiederholgenauen Lagerung verwendet werden. Durch die Ausbildung mindestens eines der Lagerelemente als Dreipunktlagerung ergibt sich in vorteilhafter Weise eine möglichst einfache, kostengünstige und bauraumsparende Bereitstellung des Lagerelements, welches jedoch die geforderte Wiederholgenauigkeit gewährleistet.

In einer weiteren Ausführungsform ist eine Antriebseinrichtung des optischen Systems über mindestens ein Kopplungselement mechanisch mit dem Träger gekoppelt. Dies wurde vorhergehend bereits erläutert. Weiter ist mindestens ein Kopplungselement als Federelement ausgebildet. Dies kann bedeuten, dass zumindest ein Teil der Antriebskraft zur Kompensation einer Federkraft verwendet wird und/oder in eine potentielle Energie eines Federelements umgewandelt wird. Insbesondere kann das Federelement derart angeordnet und/oder ausgebildet sein, dass in der Anschlaglage des Trägers eine Federkraft auf den Träger ausübbar ist oder ausgeübt wird, die den Träger an die Anschlagelemente zur statischen Lagerung drückt.

Es ist beispielsweise vorstellbar, dass das Federelement derart angeordnet und/oder ausgebildet ist, dass sich ein erstes Ende des Federelements in einer vorbestimmten Lage oder in einem vorbestimmten Lagebereich befindet, wenn sich der Träger in einer Anschlaglage befindet. Mit anderen Worten ist die Lage oder der Lagebereich des ersten Endes in einer Anschlaglage festgelegt. Weiter kann in der Anschlaglage des Trägers die Lage des weiteren Endes, beispielsweise durch Betrieb der Antriebseinrichtung, derart eingestellt werden, dass eine durch die Relativlage der Enden erzeugte Federkraft derart auf den Träger drückt, dass dieser nur entgegen der Federkraft aus der Anschlaglage herausbewegt werden kann. Hierdurch kann in vorteilhafter Weise sichergestellt werden, dass der Träger die Soll-Anschlaglage einnimmt und sich, insbesondere auch ohne weiteres Betreiben der Antriebseinrichtung (also auch ohne weiteres Erzeugen einer Antriebskraft), in der Anschlaglage fixiert wird.

In einer weiteren Ausführungsform ist das Federelement als Blattfeder ausgebildet oder umfasst mindestens einen Blattfederabschnitt. Hierbei kann ein freies Ende der Blattfeder/des Blattfederabschnitts am Träger gelagert und ein weiterer Endabschnitt mit einem weiteren Kopplungselement oder einem Abtriebselement der Antriebseinrichtung verbunden sein. Hierdurch ergeben sich eine möglichst einfache Ausbildung des Federelements und somit auch eine kostengünstige und einfache Fertigung des optischen Systems. Es ist alternativ aber auch möglich, dass ein von einer Antriebseinrichtung angetriebenes starres Kopplungselement über ein Federelement mit einem weiteren starren Kopplungselement verbunden ist, welches dann mit dem Träger verbunden oder an diesem gelagert ist.

In einer weiteren Ausführungsform ist das Kopplungselement oder ein weiteres Kopplungselement als bewegungsgeführtes Kopplungselement ausgebildet. Hierzu kann das optische System mindestens ein Lagerungs- und/oder Führungselement zur Führung der Bewegung des Kopplungselements umfassen. Das Führungselement kann z.B. zur Profilschienenführung oder zur Käfigführung ausgebildet sein. Das Kopplungselement oder ein weiteres Kopplungselement kann insbesondere ein linearbewegungsgeführtes Kopplungselement sein. So ist es insbesondere vorstellbar, dass ein weiteres, linearbewegungsgeführtes Kopplungselement über das mindestens eine Federelement mechanisch mit dem Träger gekoppelt ist. Hierdurch ergibt sich in vorteilhafter Weise eine einfache und zuverlässige Übertragung einer Antriebskraft zur Linearbewegung von der Antriebseinrichtung auf den Träger.

In einer bevorzugten Ausführungsform weist der Träger mindestens einen Aufnahmeabschnitt zur Aufnahme eines Kopplungselements, insbesondere des Federelements oder eines Teils davon, auf oder bildet diesen aus. Der Aufnahmeabschnitt kann insbesondere als Schlitz oder Nut ausgebildet sein. Dieser Schlitz/diese Nut kann beispielsweise in eine Seitenfläche eines plattenförmigen oder quaderförmigen Trägers angeordnet und nach außen geöffnet sein. In diesen Aufnahmeabschnitt kann ein Abschnitt des Kopplungselements hineinragen. Weiter kann sich eine Dimension des Aufnahmeabschnitts entlang seiner Mittellinie verändern. Beispielsweise kann sich eine Breite des Schlitzes/der Nut entlang einer Längsachse des Schlitzes/der Nut verändern. Ragt das Längselement beispielsweise an einer ersten (Stirn-)Seite in den Aufnahmeabschnitt hinein, so kann die Breite von diesem ersten Ende entlang der Längsachse abnehmen, beispielsweise linear bis zum Erreichen einer vorbestimmten Mindestbreite. Hierdurch kann, insbesondere bei Ausbildung des Kopplungselements als Blattfeder, sichergestellt werden, dass die Kraftübertragung über das Kopplungselement auf den Träger möglichst gleichmäßig erfolgt und kein unerwünschtes Verkippen des Trägers durch eine punktuelle Kraftübertragung auftritt. Somit ergibt sich also eine zuverlässige Positionierung in der Anschlaglage mit der geforderten Wiederholgenauigkeit.

In einer weiteren Ausführungsform ist ein mit dem Träger gekoppeltes Kopplungselement beweglich am Träger gelagert, wobei die Relativbewegung zwischen Träger und Kopplungselement begrenzt ist. Beispielsweise kann eine Blattfeder oder ein Abschnitt der Blattfeder beweglich am Träger gelagert sein. Auch hierdurch ergibt sich in vorteilhafter Weise, dass eine möglichst gleichmäßige Kraftübertragung über das Kopplungselement auf den Träger erfolgen kann, nämlich indem sich das Kopplungselement, insbesondere auch während der Kraftübertragung, relativ zum Träger bewegen kann. Durch die gleichmäßige Kraftübertragung kann insbesondere ein Verkippen des Trägers und somit auch ein Herausrutschen aus der Anschlaglage vermieden oder das Risiko hierfür minimiert werden. Somit ergibt sich in vorteilhafter Weise eine zuverlässige Bereitstellung der Wiederholgenauigkeit der Positionierung in den Anschlaglagen.

Erfindungsgemäß umfasst das optische System mindestens ein Arretierelement zur Arretierung des Trägers in mindestens einer Anschlaglage. Vorzugsweise umfasst das optische System ein Arretierelement zur Arretierung des Trägers in beiden Anschlaglagen. Durch das Arretierelement kann der Träger in der/den Anschlaglage fixiert werden, wobei zur Fixierung kein Erzeugen einer Antriebskraft durch die Antriebseinrichtung erforderlich. Hierbei kann das Arretierelement in einem Arretierzustand die erläuterte Fixierung gewährleisten. Allerdings ist es auch möglich, das Arretierelement in einen nichtarretierenden Zustand zu versetzen, indem die Bewegung des Trägers aus der Anschlaglage heraus freigegeben ist. Das Versetzen in den nichtfixierten Zustand kann beispielsweise erfolgen, indem eine vorbestimmte Kraft auf den Träger zur Bewegung aus der Anschlaglage hinaus ausgeübt wird. Hierdurch ergibt sich in vorteilhafter Weise ein energiesparender Betrieb des optischen Systems sowie eine zuverlässige dauerhafte Positionierung des Trägers in einer Anschlaglage.

Weiter erfindungsgemäß ist das Arretierelement zur Arretierung eines Kopplungselements ausgebildet. Mit anderen Worten wird die Kraft zur Arretierung des Trägers in einer Anschlaglage nicht direkt vom Arretierelement auf den Träger ausgeübt, sondern vom Arretierelement auf ein Kopplungselement und von diesem dann auf den Träger übertragen. Hierdurch ergibt sich in vorteilhafter Weise eine einfache mechanische Herstellung des optischen Systems. Ferner werden auch unerwünschte Bewegungen des Trägers aus der Anschlaglage aufgrund von auf den Träger ausgeübten Arretierkräften vermieden.

In einer weiteren Ausführungsform umfasst das Arretierelement eine Blattfeder und ein Kugellager. Hierbei kann ein erstes freies Ende der Blattfeder beispielsweise an einer Trägerstruktur oder einem Gehäuse des optischen Systems befestigt sein, wobei an einem weiteren Ende ein Kugellager angeordnet ist. Dieses Kugellager kann in eine Vertiefung oder Ausnehmung im Träger oder in einem Kopplungselement eintauchen, um einen arretierten Zustand herzustellen. Beispielsweise kann also das Arretierelement derart angeordnet und/oder ausgebildet sein, dass das Kugellager in die Vertiefung eintaucht, wenn sich der Träger in der Anschlaglage befindet bzw. wenn sich das Kopplungselement in einer Lage befindet, die sich einstellt, wenn sich der Träger in der Anschlaglage befindet. Hierdurch ergibt sich eine mechanisch einfache, kostengünstige, jedoch zuverlässig funktionierende Arretierung des Trägers.

In einer weiteren Ausführungsform umfasst das optische System Elemente mindestens eines elektrischen Schaltkreises oder bildet diese aus, wobei der elektrische Schaltkreis geschlossen ist, wenn sich der Träger in einer der beiden Anschlaglagen befindet. Weiter ist der elektrische Schaltkreis geöffnet, wenn sich der Träger nicht in einer Anschlaglage befindet. Beispielsweise kann der mindestens eine elektrische Schaltkreis geschlossen sein, wenn eines, mehrere, aber nicht alle, oder aber alle der vorhergehend erläuterten korrespondierenden Lagerelemente des Trägers die Lagerelemente zur statischen Lagerung mechanisch kontaktieren. Dies kann insbesondere der Fall sein, wenn ein Kopfelement oder -abschnitt einen korrespondierenden Pfannenabschnitt oder ein korrespondierendes Pfannenelement mechanisch kontaktiert.

Selbstverständlich kann das optische System auch Elemente mehrerer Schaltkreise umfassen, wobei ein erster elektrischer Schaltkreis geschlossen ist, wenn sich der Träger in einer ersten Anschlaglage befindet und ein weiterer elektrischer Schaltkreis geschlossen ist, wenn sich der Träger in der weiteren Anschlaglage befindet.

Ein solches optisches System ermöglicht in vorteilhafter Weise eine zuverlässige Detektion, ob sich der Träger in einer Anschlaglage befindet. So kann beispielsweise detektiert werden, dass sich der Träger in einer Anschlaglage befindet, wenn detektiert wird, dass der elektrische Schaltkreis geschlossen ist. Dass der elektrische Schaltkreis geschlossen ist, kann beispielsweise detektiert werden, wenn ein Stromfluss durch den elektrischen Schaltkreis höher als ein vorbestimmter Schwellwert ist.

Weiter vorgeschlagen wird ein Verfahren zum Betreiben eines optischen Systems gemäß einer der in dieser Offenbarung beschriebenen Ausführungsformen. Hierbei wird der Träger zwischen den Anschlaglagen bewegt, insbesondere in eine erste Anschlaglage oder in eine weitere Anschlaglage. Hierzu kann eine Antriebseinrichtung des optischen Systems zur Erzeugung einer entsprechenden Antriebskraft angesteuert werden. Die Erzeugung von Steuersignalen für die Antriebseinrichtung kann hierbei durch eine Steuereinrichtung erfolgen, die insbesondere als Mikrocontroller oder integrierte Schaltung ausgebildet sein oder eine(n) solche(n) umfassen kann. Das optische System kann hierbei eine entsprechende Steuereinrichtung zur Erzeugung der Steuersignale umfassen. Es ist allerdings auch möglich, dass die Steuereinrichtung eine Einrichtung eines übergeordneten Systems ist, die Steuersignale in Abhängigkeit eines Anwendungsszenarios erzeugt.

Durch die Bewegung in die erste Anschlaglage kann beispielsweise ein Erfassungsbereich mit einem ersten Erfassungswinkel eingestellt werden. Durch die Bewegung in die weitere Anschlaglage kann ein Erfassungsbereich mit einem weiteren Erfassungswinkel eingestellt werden. Hierbei kann beispielsweise der weitere Erfassungswinkel kleiner als der erste Erfassungswinkel sein. Es ist jedoch möglich, dass die optischen Achsen der Erfassungsbereiche in den Anschlaglagen konzentrisch angeordnet sind. Selbstverständlich können durch die Bewegung in die Anschlaglagen auch weitere Parameter des optischen Systems, beispielsweise eine Brennpunktlage, auf anschlaglagenspezifische, voneinander verschiedene Werte eingestellt werden.

In einer weiteren Ausführungsform wird nach einer Bewegung des Trägers in eine Anschlaglage geprüft wird, ob der Träger sich in der Anschlaglage befindet. Dies kann beispielsweise geprüft werden, indem geprüft wird, ob - wie vorhergehend erläutert - ein elektrischer Schaltkreis geschlossen ist. Wird detektiert, dass sich der Träger in einer Anschlaglage befindet, so kann die Antriebseinrichtung deaktiviert werden bzw. ein von der Antriebseinrichtung erzeugtes Moment reduziert werden. Hierdurch ergibt sich in vorteilhafter Weise ein zuverlässiger und energiesparender Betrieb des optischen Systems.

Weiter beschrieben wird ein Mikroskopiesystem mit einem optischen System gemäß einer der in dieser Offenbarung beschriebenen Ausführungsformen. Das Mikroskopiesystem umfasst ein Mikroskop. Im Sinne dieser Offenbarung zeichnet ein Mikroskop eine Einrichtung zur vergrößernden visuellen Darstellung eines Untersuchungsobjekts. Das Mikroskop kann ein klassisches Lichtmikroskop sein, welches ein vergrößertes Abbild durch Ausnutzung optischer Effekte erzeugt, insbesondere durch Mittel zur Strahlführung und/oder -formung und/oder -lenkung, beispielsweise Linsen. Das Mikroskop kann aber auch ein Digitalmikroskop sein, wobei das von dem Mikroskop zu visualisierende Abbild mittels einer Bilderfassungseinrichtung erzeugt und auf einer entsprechenden Anzeigeeinrichtung, beispielsweise einem Display, zur Anzeige gebracht werden kann. Weiter kann das Mikroskop einen Mikroskopkörper umfassen. Der Mikroskopkörper kann einen Strahlengang für die mikroskopische Abbildung aufweisen oder ausbilden. Der Mikroskopkörper kann hierbei weitere optische Elemente zur Strahlführung und/oder - formung und/oder -ablenkung umfassen. Ein Objektiv des Mikroskopkörpers kann in den Mikroskopkörper integriert oder an diesem befestigt sein, insbesondere lösbar. Hierbei kann das Objektiv ortsfest relativ zum Mikroskopkörper angeordnet sein.

Das Mikroskopiesystem kann eine Trackingkamera zur Lagebestimmung eines Targets umfassen. Das in dieser Offenbarung beschriebene optische System kann ein optisches System dieser Trackingkamera bilden, insbesondere also Strahlen zu einem Bildsensor der Trackingkamera führen. Das optische System kann in den Mikroskopkörper integriert sein. Ein Strahlengang des optischen Systems der Trackingkamera kann von dem Strahlengang für die mikroskopische Abbildung verschieden, insbesondere von diesem getrennt ausgebildet, sein.

Das Mikroskopiesystem kann mindestens eine Einrichtung zur Bestimmung eines Soll-Arbeitsabstands der Trackingkamera umfassen. Dieser Soll-Arbeitsabstand der Trackingkamera kann einen Abstand zwischen einer Schärfeebene und einem Abschlusselement eines optischen Systems der Trackingkamera entlang einer optischen Achse der Trackingkamera bezeichnen, die durch das Objektivsystem festgelegt sein. Das Abschlusselement kann beispielsweise eine Linse (Frontlinse) des Objektivsystems oder eine transparente Abschlussscheibe sein. Die Schärfen- oder Detektionsebene kann eine Ebene im Objektraum bezeichnen, wobei ein Objekt in dieser Ebene mit einer gewünschten Schärfe abgebildet wird. Sie kann orthogonal zur optischen Achse der Trackingkamera orientiert sein, die die Schärfenebene in der Mitte des Schärfentiefenbereichs schneidet. Der Schärfentiefenbereich ist in bekannter Weise abhängig von einer aktuell eingestellten Brennweite, der aktuell eingestellten Entfernung als auch der aktuell eingestellten Blendenöffnung. So ist es insbesondere möglich, die Schärfeebene und somit auch den Sol-Arbeitsabstand in Abhängigkeit mindestens einer der genannten Größen zu bestimmen. Selbstverständlich sind auch andere Verfahren zur Bestimmung des Soll-Arbeitsabstands denkbar.

Vorzugsweise wird der Soll-Arbeitsabstand der Trackingkamera in Abhängigkeit eines Arbeitsabstands des Mikroskops bestimmt werden, beispielsweise mittels einer vorbekannten Zuordnung. Durch die Zuordnung kann ein Soll-Arbeitsabstand der Trackingkamera einem Arbeitsabstandsbereich des Mikroskops zugeordnet sein. Der Arbeitsabstand des Mikroskops kann automatisiert bestimmt werden, beispielsweise über eine Autofokusfunktion. Diese Autofokusfunktion kann beispielsweise durch eine Fokussiereinrichtung des Mikroskopiesystems durchgeführt werden, wobei z.B. eine Bildweite eines Objektivs des Mikroskops eingestellt wird, wobei einer eingestellten Bildweite ein Arbeitsabstand zugeordnet ist bzw. aus einer eingestellten Bildweite ein Arbeitsabstand bestimmt werden kann, beispielsweise über eine vorbestimmte Funktion, insbesondere eine Polynomkurvenfunktion. So kann z.B. angenommen werden, dass ein Abstand eines Markers, insbesondere wenn er an einem Instrument angeordnet ist, von der Trackingkamera des Mikroskopiesystems genau oder annähernd dem Arbeitsabstand des Mikroskops entspricht, insbesondere weil ein Chirurg z.B. das Instrument mit einem solchen Marker in der Regel auch in dem von dem Mikroskop scharf abgebildeten Bereich benutzt/bewegt.

Die Lage des Trägers mit dem beweglichen optischen Element ist zur Einstellung eines Erfassungsbereichs der Trackingkamera veränderbar ist. Insbesondere kann durch die Lageveränderung ein Bildwinkel der Trackingkamera verändert werden. Durch die Bewegung des optischen Elements kann auch die Lage eines Brennpunkts des optischen Elements bzw. eines das optische Element umfassenden optischen Systems, das auch als Objektivsystem bezeichnet werden kann, verändert werden. Vorzugsweise ist die Lage des beweglichen optischen Elements in Abhängigkeit des Soll-Arbeitsabstands einstellbar. Beispielsweise können verschiedenen Soll-Arbeitsabständen oder verschiedenen Soll-Arbeitsabstandsbereichen jeweils verschiedene Lagen des beweglichen optischen Elements zugeordnet sein, wobei für einen Soll-Arbeitsabstand die Lage eingestellt wird, die diesem Soll-Arbeitsabstand oder dem Bereich, in dem der Soll-Arbeitsabstand liegt, zugeordnet ist. Z.B. kann die Zuordnung eines Arbeitsabstands des Mikroskops zu einem Soll-Arbeitsabstand der Trackingkamera durch ein Kalibrierverfahren bestimmt werden. Auch ist es vorstellbar, dass ein funktioneller Zusammenhang zwischen der Lage und dem Soll-Arbeitsabstand besteht, wobei die Lage dann durch Auswertung des Zusammenhangs über einen Soll-Arbeitsabstand ermittelt werden kann. Die verschiedenen einstellbaren Lagen des beweglichen optischen Elements legen verschiedene Erfassungsbereiche, insbesondere Erfassungsbereiche mit voneinander verschiedenen Erfassungswinkeln, fest. Insbesondere kann jeder der beiden Anschlaglagen genau ein Soll-Arbeitsabstand oder -bereich zugeordnet sein.

Die Erfindung wird anhand von Ausführungsbeispielen näher erläutert. Die Figuren zeigen:
- Fig. 1: eine schematische Darstellung eines optischen Elements an zwei Anschlaglagen,
- Fig. 2: eine perspektivische Darstellung von zwei Endanschlagelementen eines optischen Systems,
- Fig. 3: eine schematische Draufsicht auf einen Träger eines optischen Systems,
- Fig. 4: eine schematische Draufsicht auf einen Träger mit zusätzlicher Darstellung eines Lagerelements zur statischen Lagerung,
- Fig. 5: einen schematischen Querschnitt durch ein optisches System,
- Fig. 6a: eine schematische, perspektivische Ansicht eines optischen Systems,
- Fig. 6b: eine weitere schematische, perspektivische Ansicht des in Fig. 6a dargestellten optischen Systems,
- Fig. 7: einen schematischen Querschnitt durch einen Träger in einem ersten Zustand des optischen Systems,
- Fig. 8: einen schematischen Querschnitt durch einen Träger in einem weiteren Zustand,
- Fig. 9: ein schematischer Querschnitt durch ein optisches System,
- Fig. 10: eine schematische Darstellung eines optischen Systems in einer weiteren Ausführungsform,
- Fig. 11: ein schematischer Querschnitt durch ein optisches System in einer weiteren Ausführungsform,
- Fig. 12: eine perspektivische Sicht auf ein Endanschlagelement,
- Fig. 13: eine schematische Darstellung eines optischen Systems in einer weiteren Ausführungsform,
- Fig. 14: eine schematische Darstellung eines optischen Systems in einer weiteren Ausführungsform,
- Fig. 15: eine schematische Darstellung eines optischen Systems in einer weiteren Ausführungsform und
- Fig. 16: ein schematisches Blockschaltbild eines erfindungsgemäßen optischen Systems.

Nachfolgend bezeichnen gleiche Bezugszeichen Elemente mit gleichen oder ähnlichen technischen Merkmalen.

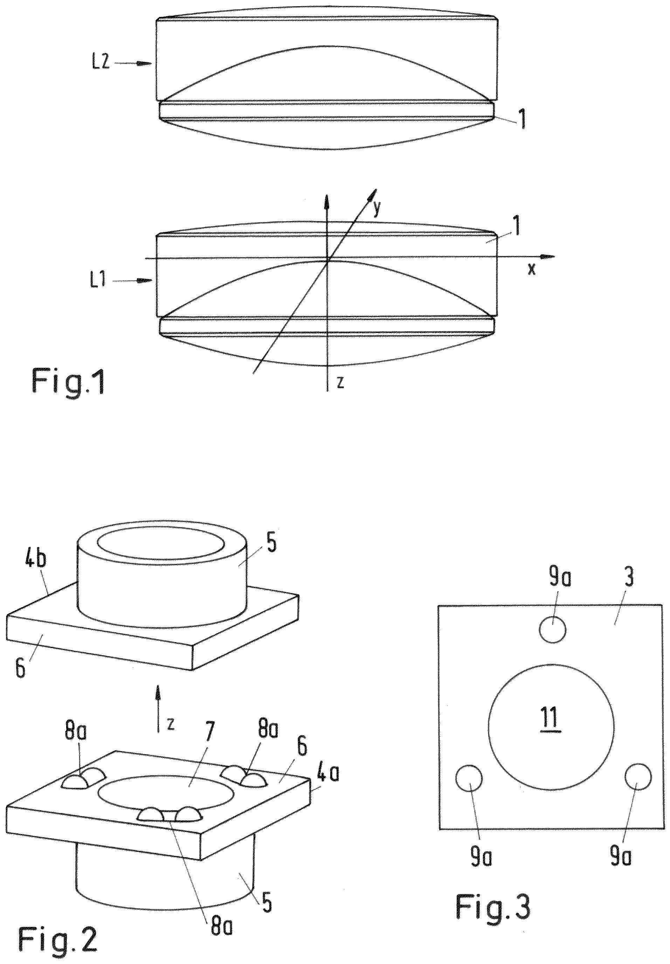

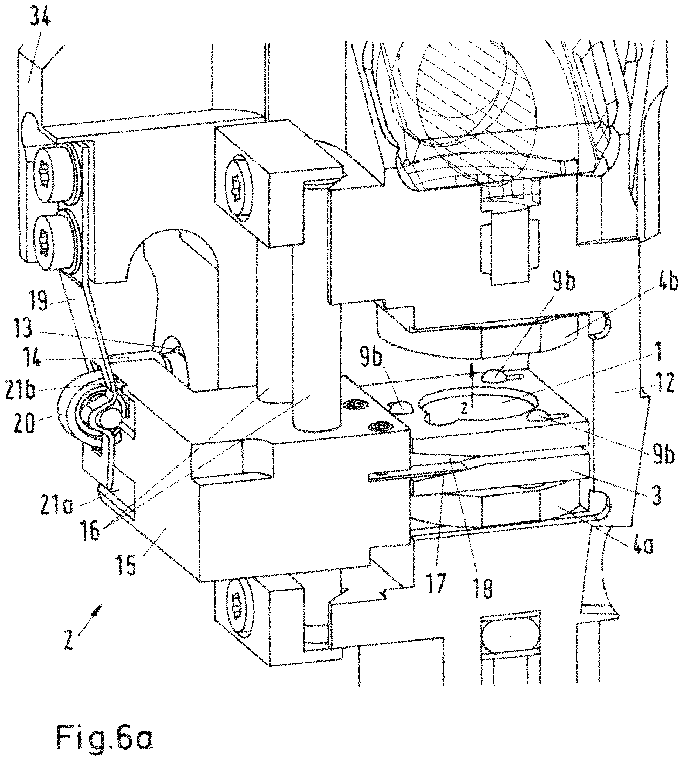

Fig. 1 zeigt eine schematische Darstellung eines optischen Elements 1 eines optischen Systems 2 (siehe Fig. 6a) in einer ersten Anschlaglage L1 eines Trägers 3 und in einer weiteren Anschlaglage L2 des Trägers 3. In Fig. 1 ist weiter ein Koordinatensystem mit einer Vertikalachse z, einer Längsachse x und einer Querachse y dargestellt. Diese Achsen x, y, z bilden Raumachsen. Raumrichtungen sind durch Pfeile der Raumachsen x, y, z repräsentiert. So ist eine Vertikalrichtung von der ersten Anschlaglage L1 zur zweiten Anschlaglage L2 orientiert. Diese Orientierung kann einer Orientierung von unten nach oben entsprechen. Das optische Element 1, was insbesondere als Linse oder Kittglied ausgebildet sein kann, ist entlang der Vertikalachse linear beweglich gelagert. Somit kann das optische Element mit einer Linearbewegung zwischen der ersten Anschlaglage L1 und der weiteren Anschlaglage L2 bewegt werden. In den Anschlaglagen L1, L2 ist, wie nachfolgend noch näher erläutert, die Position und die Orientierung des optischen Elements 1 bezogen auf das Referenzkoordinatensystem wiederholgenau festgelegt. Dies kann bedeuten, dass bei einem wiederholten Positionieren des optischen Elements in einer Anschlaglage L1, L2 eine Positionsabweichung eines Referenzpunkts des optischen Elements 1, beispielsweise eines geometrischen Mittelpunkts, kleiner als ein vorbestimmtes Maß ist, beispielsweise kleiner als zwei Mikrometer. Weiter kann dies bedeuten, dass eine Winkelabweichung bezogen auf jede der drei Achsen x, y, z des Referenzkoordinatensystems kleiner als ein vorbestimmter Winkel, beispielsweise kleiner als 2 Winkelsekunden, ist. Somit ist das bewegliche optische Element 1 an genau zwei verschiedenen Raumlagen, nämlich den Anschlaglagen L1, L2, mit einer wiederholbaren, also reproduzierbaren, Genauigkeit positionierbar. Eine absolute Positionsgenauigkeit ist hierbei nicht wesentlich. Sie kann jedoch erreicht werden, indem die Lagerelemente mit einer für die gewünschte Absolutgenauigkeit ausreichenden Präzision gefertigt und montiert werden, insbesondere mittels geeigneter Vorrichtungen.

Fig. 2 zeigt eine perspektivische Ansicht von einem ersten Endanschlagelement 4a und einem weiteren Endanschlagelement 4b. Weiter dargestellt ist die in Fig. 1 ebenfalls dargestellte Vertikalachse z des Referenzkoordinatensystems. Dargestellt ist, dass jedes der beiden Endanschlagelemente 4a, 4b einen hohlzylinderförmigen Abschnitt 5 umfasst. Es ist aber auch eine andere als die in Fig. 2 dargestellte Ausbildung de Endanschlagelemente 4a, 4b vorstellbar, wobei die Ausbildung jedoch derart ist, dass ein Strahlengang für die zu erfassenden Strahlen bereitgestellt wird. Weiter umfassen beide Endanschlagelemente 4a, 4b einen plattenförmigen Abschnitt 6, wobei dieser plattenförmige Abschnitt 6 an einer Stirnseite des jeweiligen hohlzylinderförmigen Abschnitts 5 angeordnet ist und eine Durchgangsöffnung 7 aufweist, deren zentrale Symmetrieachse konzentrisch zur zentralen Symmetrieachse des Innenvolumens des hohlzylinderförmigen Abschnitts 5 ist und deren Durchmesser gleich dem Durchmesser des Innenvolumens ist. Durch diese Durchgangsöffnung 7 und das Innenvolumen des hohlzylinderförmigen Abschnitts 5 kann Strahlung durch die Endanschlagelemente 4a, 4b geführt werden. In einem die Durchgangsöffnung 7 umgebenden Randabschnitt des plattenförmigen Abschnitts 6 sind beim ersten Endanschlagelement 4a erste Lagerelemente 8a angeordnet, die ein Dreipunktlager bilden. Jedes der drei Lagerelemente 8a bestehen aus einem Kugelpaar, dessen Kugeln in den Randabschnitt eingebettet, insbesondere eingeklebt, sind und aus diesem herausragen. Weiter sind die Kugeln eines Kugelpaares voneinander beabstandet angeordnet und bilden somit ein Aufnahmevolumen für ein korrespondierendes Lagerelement 9a eines Trägers 3. Die Kugelpaare können auch als Pfannenelemente des Dreipunktlagers bezeichnet werden. Die Kugelpaare sind hierbei entlang einer Kreislinie um die Durchgangsöffnung 7 herum angeordnet, wobei ein Durchmesser dieser Kreislinie größer als der Durchmesser der Durchgangsöffnung 7 ist. Winkelabstände zwischen den entlang der Kreislinie benachbarten Kugelpaaren sind hierbei gleich.

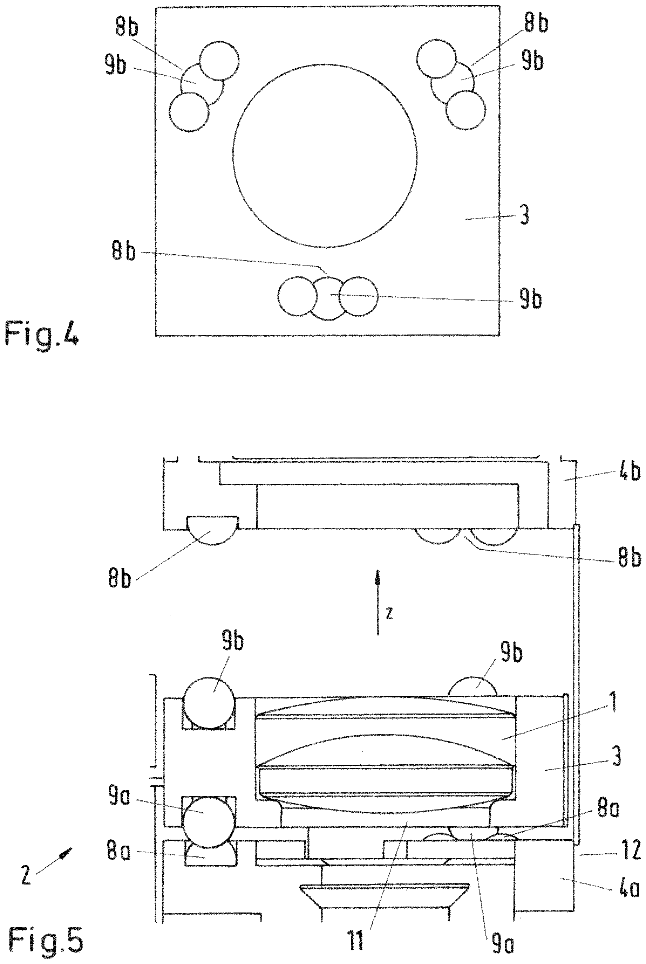

Nicht in Fig. 2 ersichtlich ist, dass der plattenförmige Abschnitt 6 des weiteren Endanschlagelements 4b ebenfalls drei Lagerelemente 8b aufweist (siehe z.B. Fig. 5), die entsprechend den Lagerelementen 8a des ersten Endanschlagelements 4a ausgebildet sind. Auch diese Lagerelemente 8b bilden ein Dreipunktlager für den Träger 3 und das an dem Träger 3 befestigte optische Element 1, wobei diese Lagerelemente 8b mit korrespondierenden Lagerelementen 9b des Trägers 3 (siehe Fig. 5) wechselwirken.

In Fig. 2 ist dargestellt, dass die Endanschlagelemente 4a, 4b entlang der Vertikalachse z mit einem vorbestimmten Abstand voneinander beabstandet angeordnet sind. Ein zwischen den Endanschlagelementen 4a angeordneter Träger 3 kann somit zwischen den Endanschlagelementen 4a, 4b bewegt werden, insbesondere mit einer Linearbewegung, bis er an einem der Endanschlagelemente 4a, 4b anschlägt. Beim Anschlagen treten die korrespondierenden Lagerelemente 9a des Trägers 3 in Wechselwirkung mit den Lagerelementen 8a, 8b des entsprechenden Endanschlagelements 4a, 4b. Hierdurch wird die Anschlaglage des Trägers 3 und somit auch des optischen Elements 1 eingestellt und festgelegt, insbesondere da die Ausbildung der Lagerelemente 8a, 8b, 9a, 9b (siehe Fig. 5) dafür sorgt, dass der Träger 3 bei jeder Bewegung entlang einer Anschlagrichtung in die Anschlaglage immer in die gleichen Relativposition und Relativorientierung bezogen auf das Endanschlagelement 4a, 4b bewegt wird, wobei sich diese Relativposition und Relativorientierung einstellt, wenn der Träger 3 an das Endanschlagelement 4a, 4b anschlägt und eine weitere Bewegung entlang der Anschlagrichtung gesperrt ist.

Fig. 3 zeigt eine schematische Draufsicht auf einen Träger 3, insbesondere eine Unterseite des Trägers 3. Dargestellt ist, dass der Träger 3 als plattenförmiges oder quaderförmiges Element ausgebildet ist und eine Durchgangsöffnung 11 mit einem Durchmesser aufweist, der größer als der oder gleich dem Durchmesser der Durchgangsöffnung 7 eines Endanschlagelements 4a, 4b ist. An einer Unterseite des Trägers 3 sind in dem Randabschnitt, der die Durchgangsöffnung 11 umgibt, als Kugeln ausgebildete korrespondierende Lagerelemente 9a angeordnet, die in den Träger 3 eingebettet, insbesondere eingeklebt, sind, wobei ein Teilabschnitt der Kugeln von der Unterseite absteht. Weiter sind die Kugeln entlang einer Kreislinie um die Durchgangsöffnung 11 herum angeordnet, wobei Winkelabstände zwischen entlang der Kreislinie benachbarter Kugeln gleich sind. Der Durchmesser dieser Kreislinie entspricht dem Durchmesser der Kreislinie entlang der der Lagerelemente 8a angeordnet sind.

Fig. 4 zeigt eine Oberseite des Trägers 3 mit den als Kugeln ausgebildeten korrespondierenden Lagerelementen 9b. Diese sind an einer Oberseite des Trägers 3 in diesen eingebettet, insbesondere eingeklebt, wobei ein Teilabschnitt der Kugeln von der Oberseite absteht. Auch diese Kugeln sind entlang einer Kreislinie um die Durchgangsöffnung 11 herum angeordnet. Winkelabstände zwischen den Kugelmittelpunkten sind hierbei zwischen entlang der Kreislinie benachbarten Kugeln gleich. Weiter dargestellt sind die korrespondierenden Lagerelemente 8b des weiteren Endanschlagelements 4b. Der Durchmesser Kreislinie entlang der die Lagerelemente 9b angeordnet sind ist gleich dem Durchmesser der Kreislinie entlang der der Lagerelemente 8b angeordnet sind.

Dargestellt ist, dass sich der Träger in der weiteren Anschlaglage befindet, wobei in dieser Anschlaglage die korrespondierenden Lagerelemente 9b die Lagerelemente 8b mechanisch kontaktieren. Insbesondere sind die korrespondierenden Lagerelemente 9b, die die Kopfelemente des Dreipunktlagers bilden, in den von den Lagerelementen 8b ausgebildeten Aufnahmeabschnitten angeordnet.

Fig. 5 zeigt einen schematischen Querschnitt durch ein optisches System 2. Dargestellt ist der Träger 3 mit dem optischen Element 1, welches an dem Träger 3 befestigt ist. Weiter dargestellt sind die Endanschlagelemente 4a, 4b, die entlang einer Vertikalrichtung z voneinander beabstandet angeordnet sind. Diese Endanschlagelemente 4a, 4b sind in einem Gehäuse 12 des optischen Systems 2 angeordnet, insbesondere an einer Unterseite und einer Oberseite des Gehäuses 12. Weiter dargestellt sind die Lagerelemente 8a des ersten Endanschlagelements 4a und die Lagerelemente 8b des weiteren Endanschlagelements 4b. Ebenfalls dargestellt ist der Träger 3 mit den korrespondierenden Lagerelementen 9b, 9a, die an einer Unterseite bzw. einer Oberseite angeordnet sind. Weiter dargestellt ist, dass die Durchgangsöffnung 11 des Trägers 3 gestuft ausgebildet ist. Dies kann bedeuten, dass sich ein Durchmesser der Durchgangsöffnung entlang der zentralen Mittellinie der Durchgangsöffnung 11 ändert, insbesondere stufen- oder sprungartig. Hierdurch wird eine Anschlagfläche zur Anlage des optischen Elements 1 gebildet. Das optische Element 1 kann bis zur Anschlagfläche in die Durchgangsöffnung eingeschoben werden und dann mit dem Träger 3 verklebt werden.

In Fig. 5 ist dargestellt, dass der Träger 3 sich in der ersten Anschlaglage befindet. Durch eine Bewegung entlang der Vertikalrichtung z kann der Träger 3 hin zum weiteren Endanschlagelement 4b bewegt werden. Schlägt er an dieses Endanschlagelement 4b an, so befindet er sich in einer weiteren Anschlaglage, die durch die Lagerelemente 8b, 9b wiederhohlgenau festgelegt ist.

Weiter dargestellt ist, dass der Träger 3 in dem Gehäuse 12 gelagert ist, wobei Seitenwände des Gehäuses 12 Lagerflächen für eine Gleitlagerung bilden. Hierbei ist ersichtlich, dass ein Durchmesser des Trägers 3 bzw. eine Breite oder Länge des Trägers 3 in einer Querschnittsebene orthogonal zur Vertikalachse z um ein vorbestimmtes Maß kleiner ist als ein Durchmesser bzw. eine Breite oder Länge des vom Gehäuse 12 umfassten Innenvolumens, in dem der Träger 3 bewegt werden kann. Hieraus resultiert ein Spiel für den Träger 3 in Bewegungslagen, also Lagen zwischen den Anschlaglagen, und somit auch des optischen Elements 1, welches größer ist als das Spiel in den Anschlaglagen. Mit anderen Worten ist die durch das Gehäuse 12 festgelegte Wiederholgenauigkeit einer Bewegungslage des optischen Elements 1 geringer als die Wiederholgenauigkeit in einer Anschlaglage L1, L2 (siehe Fig. 1).

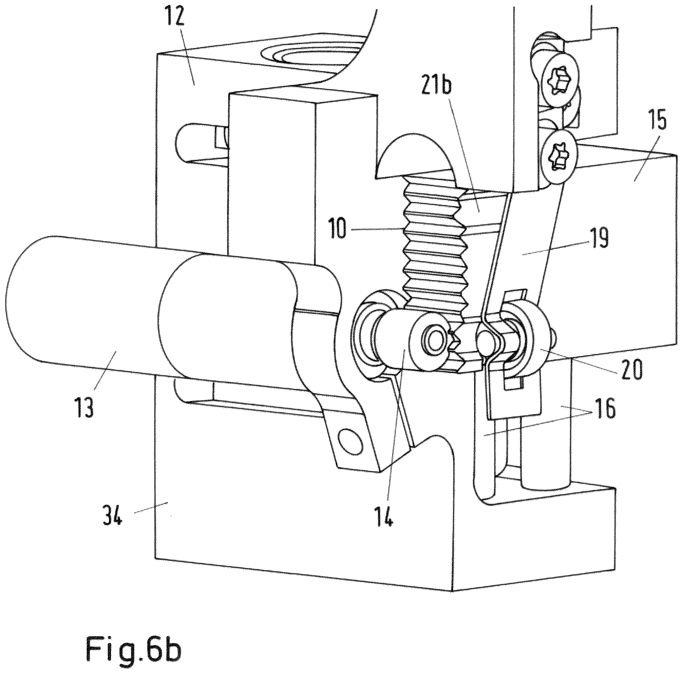

Fig. 6a und Fig. 6b zeigen verschiedene perspektivische Ansichten eines optischen Systems 2. Dargestellt ist das Gehäuse 12 zur Aufnahme des Trägers 3 und der Endanschlagelemente 4a, 4b. Das Gehäuse 12 wird von einer Trägerstruktur 34 ausgebildet oder ist an dieser befestigt. Die Trägerstruktur 34 kann Teil des optischen Systems 1 sein. Schematisch dargestellt ist das optische Element 1, welches am Träger 3 befestigt ist sowie korrespondierende Lagerelemente 9b an einer Oberseite des Trägers 3. Weiter dargestellt ist eine Antriebseinrichtung 13 mit einem als Zahnrad ausgebildeten Abtriebselement 14. Die Antriebseinrichtung 13 ist an der Trägerstruktur 34 befestigt.

Dieses Zahnradelement 14 greift in einen Zahnstangenabschnitt 10 (siehe Fig. 6b) eines ersten Kopplungselements 15 ein. Die Antriebseinrichtung 13 kann als Servo-, DC-Motor oder Schrittmotor ausgebildet sein. Das erste Kopplungselement 15 ist ein bewegungsgeführtes Kopplungselement. Zur Bewegungsführung umfasst das optische System 2 Führungsstangen 16, die durch Durchgangsöffnungen im ersten Kopplungselement 15 hindurchragen. Eine zentrale Mittellinie dieser Führungsstangen 16 ist hierbei parallel zur Vertikalachse z orientiert. Wird das Abtriebselement 14 durch die Antriebseinrichtung 13 angetrieben, so wird das erste Kopplungselement 15 in oder entgegen der Vertikalrichtung geführt, wobei diese Bewegung eine Linearbewegung ist und durch die Führungsstangen 16 geführt wird. Weiter dargestellt ist eine Blattfeder 17, wobei ein erstes Ende der Blattfeder 17 am ersten Kopplungselement 15 befestigt, insbesondere mit diesem verschraubt, ist. Ein weiteres Ende ist beweglich am Träger 3 gelagert. Dargestellt ist, dass die Blattfeder 17 vom ersten Kopplungselement 15 in einen Aufnahmeabschnitt 18, der vom Träger 3 ausgebildet wird, hineinragt. Wird nun das erste Kopplungselement 15 in oder entgegen der Vertikalrichtung bewegt, so kann eine Kraft von dem ersten Kopplungselement 15 über die Blattfeder 17 auf den Träger 3 übertragen werden, wodurch wiederum der Träger 3 bewegt wird. Insbesondere kann der Träger 3 hierdurch zwischen der ersten und der weiteren Anschlaglage L1, L2 bewegt werden. Somit bildet die Blattfeder 17 ebenfalls ein Kopplungselement.

Weiter dargestellt ist ein Arretierelement des optischen Systems 2, dass eine weitere Blattfeder 19 und ein Kugellager 20 umfasst. Hierbei ist ein erstes Ende der weiteren Blattfeder 19 am der Trägerstruktur 34 befestigt, insbesondere mit diesem verschraubt. Das Kugellager 20 ist an einem weiteren Ende der weiteren Blattfeder 20 angeordnet. Das erste Kopplungselement 15 weist zwei Aufnahmeabschnitte 21a, 21b zur Aufnahme eines Teils des Kugellagers 20 auf. Diese sind derart angeordnet, dass das Kugellager 20 von der weiteren Blattfeder 19 an den ersten Aufnahmeabschnitt 21 a gedrückt wird, wenn sich das Kopplungselement 15 in einer Lage befindet, in der der Träger 3 in der weiteren Anschlaglage L2 positioniert ist. Dieser Zustand ist in Fig. 6b dargestellt. Entsprechend ist die weitere Aufnahmeöffnung 21 b derart angeordnet, dass das Kugellager 20 von dem weiteren Blattfederelement 19 in diese hineingedrückt wird, wenn sich das erste Kopplungselement 15 in einer Position befindet, in der der Träger 3 sich in der ersten Anschlaglage L1 befindet. Dieser Zustand ist in Fig. 6a dargestellt. Hierdurch wird das erste Kopplungselement 15 und somit auch der mit dem Kopplungselement 15 verbundene Träger 3 in der entsprechenden Anschlaglage L1, L2 arretiert. Übt jedoch die Antriebseinrichtung 13 ein ausreichend hohes Drehmoment aus, so wird das Kugellager 20 aus der entsprechenden Ausnehmung 21 a, 21b herausgedrückt und das erste Kopplungselement 15 (und somit auch der Träger 3) können sich aus der arretierten Lage herausbewegen.

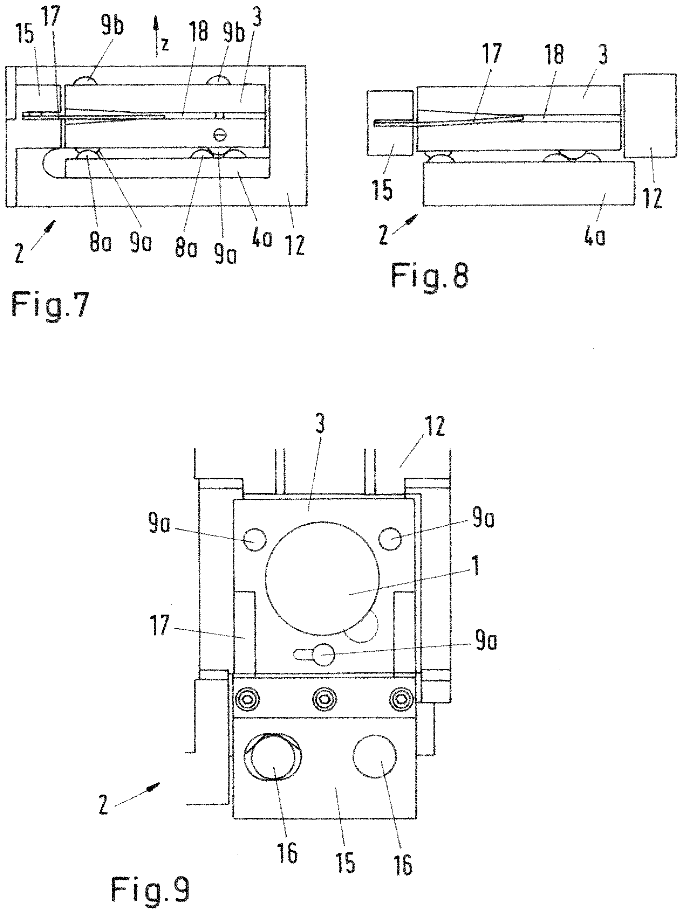

Fig. 7 zeigt einen schematischen Querschnitt durch ein optisches System 2. Dargestellt ist das Gehäuse 12 sowie das erste Endanschlagelement 4a mit den Lagerelementen 8a. Ebenfalls dargestellt ist der Träger 3 mit den korrespondierenden Lagerelementen 9a, 9b. Ebenfalls dargestellt ist ein Abschnitt des ersten Kopplungselements 15, in dem das Blattfederelement 17 an dem ersten Kopplungselement 15 befestigt ist. Weiter dargestellt ist der Aufnahmeabschnitt 18, der vom Träger 3 für die Blattfeder 17 ausgebildet wird. Der Aufnahmeabschnitt 18 ist als Nut ausgebildet, die sich in einer zur Vertikalrichtung senkrechten Richtung entlang einer Seitenfläche des Trägers 3 erstreckt. Dargestellt ist, dass sich in einem Teilabschnitt des Aufnahmeabschnitts 18 eine Breite des Aufnahmeabschnitts 18, die entlang der Vertikalrichtung gemessen wird, hin zum ersten Kopplungselement 15 vergrößert. Somit verändert sich also eine Breite des Aufnahmeabschnitts 18 entlang einer Längserstreckung des Aufnahmeabschnitts 18. Im verbleibenden Teilabschnitt ist die Breite jedoch konstant. Diese Ausbildung des Aufnahmeabschnitts 18 ermöglicht in Zusammenwirkung mit den Federeigenschaften der Blattfeder 17 eine möglichst gleichmäßige Kraftübertragung vom ersten Kopplungselement 15 auf den Träger 3, die ein Verkippen des Trägers 3 in einer Anschlaglage L1, L2 verhindert bzw. das Risiko hierfür verringert.

In Fig. 8 ist ein Zustand des optischen Systems 2 dargestellt, indem das erste Kopplungselement 15 durch Betrieb der Antriebseinrichtung 13 (siehe Fig. 6a) derart positioniert wird, dass durch die Blattfeder 17 eine Anpresskraft auf den Träger 3 ausgeübt wird, wenn sich dieser in einer Anschlaglage, hier die erste Anschlaglage L1, befindet. Hierbei wird das erste Kopplungselement 15 derart bewegt, dass die Blattfeder 17 an eine Seitenwand des Aufnahmeabschnitts 18 angedrückt wird und sich verbiegt. Durch die Veränderung der Breite und die Federeigenschaften des Blattfederelements 17 erfolgt ein gleichmäßiges Andrücken der Blattfeder 17 an die Seitenwand des Aufnahmeabschnitts 18 und somit eine gleichmäßig über diese Seitenwand verteilte Übertragung der Andrückkraft. Im Vergleich zu einer Ausführungsform, in der z.B. die Blattfeder 17 als mechanisch starres Element, beispielsweise als starre Metallzunge, und/oder der Aufnahmeabschnitt 18 mit einer konstanten Breite ausgebildet ist, ergibt sich somit eine zuverlässige Übertragung einer Andrückkraft auf den Träger 3, da bei der geschilderten alternativen Ausführungsform eine Andrückkraft hauptsächlich auf einen dem ersten Kopplungselement 15 benachbarten Abschnitt des Trägers 3 und weniger verteilt als bei der dargestellten Ausführungsform ausgeübt wird, wodurch die Gefahr eines Verkippens des Trägers 3 erhöht ist.

Fig. 9 zeigt einen schematischen Querschnitt durch ein optisches System 2 in einer weiteren Ausführungsform. Dargestellt ist der Träger 3 mit dem daran befestigten optischen Element 1. Weiter dargestellt ist das Gehäuse 12, in dem der Träger 3 beweglich gelagert ist. Weiter ersichtlich sind das erste Kopplungselement 15 sowie die Führungsstangen 16, die sich durch das erste Kopplungselement 15 erstrecken. Hierbei ist dargestellt, dass eine Durchgangsöffnung des ersten Kopplungselements 15 größere Dimensionen als der sich durch diese Öffnung erstreckende Führungsstab 16 aufweist, was in einem Spiel in der entsprechenden Bewegungsführung resultiert.

Ebenfalls dargestellt ist die Blattfeder 17. Es ist ersichtlich, dass diese als U-förmiges Profilelement ausgebildet ist, wobei die beiden Schenkel des U-förmigen Profilelements sich von dem ersten Kopplungselement 15 zum Träger 3 und insbesondere in dessen Aufnahmeabschnitte 18 (siehe z.B. Fig. 7) erstrecken. Ein Basisabschnitt des Profilelements ist mit dem ersten Kopplungselement 15 verschraubt. Somit kann eine Antriebskraft von der Antriebseinrichtung 13 (siehe Fig. 6a) über das erste Kopplungselement und beide Schenkel des Federelements 17 auf den Träger 3 übertragen werden. Insbesondere ragen die Schenkel des U-förmigen Profilelements in zwei Aufnahmeabschnitte 18 hinein, die an zwei gegenüberliegenden Seiten des Trägers 3 angeordnet sind.

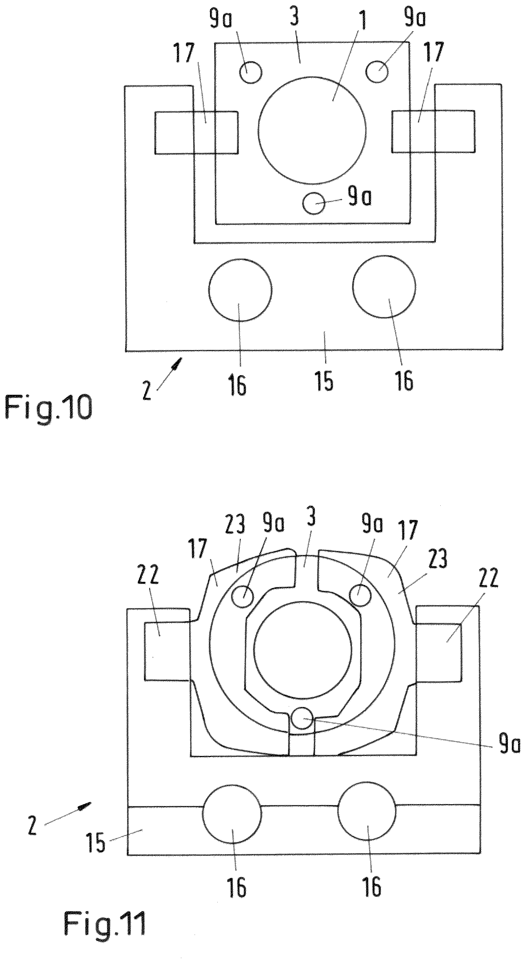

Fig. 10 zeigt einen schematischen Querschnitt durch ein optisches System 2 in einer weiteren Ausführungsform. Dargestellt sind wiederum das erste Kopplungselement 15 sowie die Führungsstangen 16. Hierbei ist das erste Kopplungselement 15 in einer Querschnittsebene senkrecht zur Vertikalachse z (siehe z.B. Fig. 6a) U-profilförmig ausgebildet. Ein Basisabschnitt des ersten Kopplungselements 15 weist Durchgangslöcher zur Aufnahme der Führungsstangen 16 auf. An freien Enden der Schenkelabschnitte des ersten Kopplungselements 15 sind jeweils Blattfedern 17 angeordnet, die an dem ersten Kopplungselement 15 befestigt sind und sich in nicht dargestellte Aufnahmeabschnitte 18 des Trägers 3 erstrecken.

Fig. 11 zeigt einen schematischen Querschnitt durch ein optisches System 2 in einer weiteren Ausführungsform. Im Unterschied zu der in Fig. 10 dargestellten Ausführungsform sind die Blattfederelemente 17 nicht quaderförmig ausgebildet, sondern umfassen einen Basisabschnitt 22, der an dem ersten Kopplungselement 15 befestigt ist und einen halbringförmigen Abschnitt 20, der zumindest abschnittsweise in einem nicht dargestellten Aufnahmeabschnitt 18 des Trägers 3 angeordnet ist. Der halbringförmige Abschnitt 20 umfasst hierbei einen Teil des Trägers 3. Hierdurch lässt sich eine weiter verbesserte Kraftübertragung von dem ersten Kopplungselement 15 auf den Träger 3 realisieren.

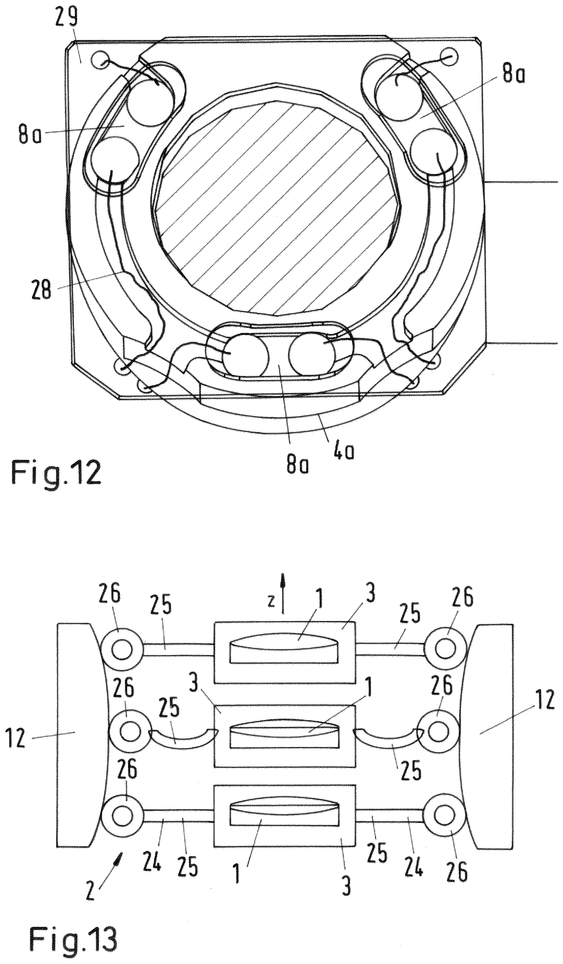

Fig. 12 zeigt eine schematische perspektivische Ansicht des ersten Endanschlagelements 4a. Dargestellt sind elektrische Leitungen 28, über die die elektrisch leitfähigen Kugeln der Lagerelemente 8a mit einer Platine 29 verbunden sind. Die elektrischen Leitungen können hierbei Elemente eines Stromkreises sein. Auch die Platine 29 kann Elemente des Stromkreises aufweisen oder ausbilden. Dieser Stromkreis kann geschlossen sein, wenn die korrespondierenden Lagerelemente 9a, die ebenfalls elektrisch leitfähig ausgebildet sein können, sich in der ersten Anschlaglage L1 (siehe Fig. 1) befinden und hierbei die Kugeln der Lagerelemente 8a kontaktieren. Somit wird einerseits ein mechanischer als auch ein elektrischer Kontakt hergestellt und der Stromkreis geschlossen. Hierdurch kann detektiert werden, dass sich der Träger 3 in der Anschlaglage L1 befindet.

Fig. 13 zeigt eine schematische Ansicht eines optischen Systems 2 in einer weiteren Ausführungsform. Dargestellt ist ein Gehäuse 12, in dem der Träger 3 mit dem an dem Träger 3 befestigten optischen Element 1 beweglich gelagert ist. An dem Träger 3 sind Bewegungslagerungselemente 24 befestigt, die einen Blattfederabschnitt 25 und ein Kugellager 26 umfassen. Weiter dargestellt ist, dass das Gehäuse 12 konkav ausgebildete Wandabschnitte umfasst, die in das Innenvolumen, in dem der Träger 3 beweglich gelagert ist, hineinragen. Die Oberflächen dieser konkaven Wandabschnitte bilden Rollflächen für die Kugellager 26. Wird der Träger 3 entlang oder entgegen der Vertikalrichtung bewegt, so kann sich das Bewegungslagerungselement 24, insbesondere der Blattfederabschnitt 25, verformen.

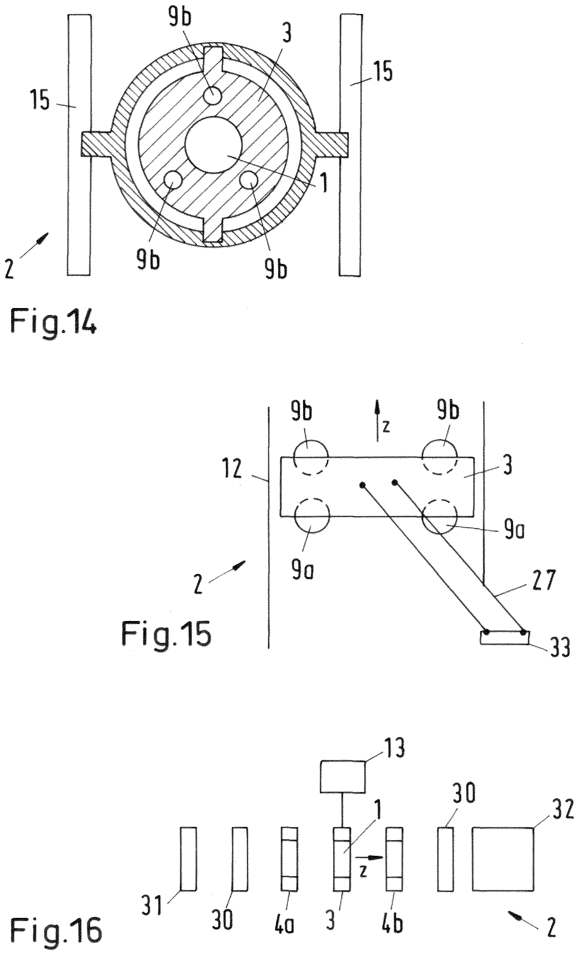

Fig. 14 zeigt einen schematischen Querschnitt durch ein optisches System 2 in einer weiteren Ausführungsform. Dargestellt ist der Träger 3 mit korrespondierenden Lagerelementen 9b. Der Träger 3 ist kardanisch an dem ersten Kopplungselement 15 gelagert. Die kardanische Lagerung ermöglicht insbesondere eine Rotation des Trägers 3 um eine nicht dargestellte Längsachse x und Querachse y (siehe Fig. 1) eines Referenzkoordinatensystems. Das erste Kopplungselement 15 kann hierbei - wie erläutert - in und entgegen der Vertikalrichtung bewegt werden. Diese ist im dargestellten Ausführungsbeispiel senkrecht zur Zeichenebene orientiert.

Fig. 15 zeigt ein optisches System 2 gemäß einer weiteren Ausführungsform. Dargestellt ist, dass der Träger 3 über ein Koppelgelenk 27 mit einer Linearantriebseinrichtung 28 gekoppelt ist, wobei diese eine Linearbewegung entlang einer Achse, die senkrecht zur Vertikalachse z orientiert ist, durchführen kann. Durch diese Linearbewegung wird aufgrund des Koppelgelenks 27 eine Antriebskraft auf den Träger 3, der in dem Gehäuse 12 beweglich gelagert ist, derart ausgeübt, dass dieser entlang und entgegen der Vertikalrichtung z bewegt werden kann.

Fig. 16 zeigt ein schematisches Blockschaltbild eines erfindungsgemäßen optischen Systems 2. Dargestellt ist der Träger 3 mit dem daran befestigten optischen Element 1 sowie Endanschlagelemente 4a, 4b. Weiter dargestellt ist, dass das optische System 2 weitere optische Elemente 30 umfassen kann, beispielsweise als weitere Linsen oder als Spiegel ausgebildete optische Elemente. Diese weiteren optischen Elemente 30 können jedoch ortsfest, also unbeweglich, angeordnet sein. Weiter dargestellt ist, dass das optische System 2 ein Abschlussglas 31 umfasst, welches den Strahlengang des optischen Systems 2 von einer äußeren Umgebung abschließt. Weiter dargestellt ist ein Bildsensor 32 einer Bilderfassungseinrichtung. Dieser Bildsensor 32 kann ebenfalls Bestandteil des optischen Systems 2 sein.

### Bezugszeichenliste

- 1: optisches Element
- 2: optisches System
- 3: Träger
- 4a, 4b: Endanschlagelement
- 5: hohlzylinderförmiger Abschnitt
- 6: plattenförmiger Abschnitt
- 7: Durchgangsöffnung
- 8a: Lagerelement
- 9a: korrespondierendes Lagerelement
- 8b: Lagerelement
- 9b: korrespondierendes Lagerelement
- 10: Zahnstangenabschnitt
- 11: Durchgangsöffnung
- 12: Gehäuse
- 13: Antriebseinrichtung
- 14: Abtriebselement
- 15: Kopplungselement
- 16: Führungsstange
- 17: Blattfeder, Kopplungselement
- 18: Aufnahmeabschnitt
- 19: weitere Blattfeder
- 20: Kugellager
- 21a, 21b: Aufnahmeabschnitt
- 22: Basisabschnitt
- 23: halbringförmiger Abschnitt
- 24: Bewegungslagerungselement
- 25: Blattfederabschnitt
- 26: Kugellager
- 27: Koppelgelenk
- 28: elektrische Leitung
- 29: Platine
- 30: weitere optische Elemente
- 31: Abschlussglas
- 32: Bildsensor
- 33: Antriebseinrichtung
- 34: Trägerstruktur
- L1: erste Anschlaglage
- L2: zweite Anschlaglage
- x: Längsachse
- y: Querachse
- z: Vertikalachse

## Patentansprüche

1. Optisches System, wobei das optische System (2) mindestens einen Träger (3) mit mindestens einem optischen Element (1), ein Bewegungslagerelement zur Lagerung des Trägers (3) während einer Bewegung, mindestens ein erstes Lagerelement und mindestens ein weiteres Lagerelement (8a, 8b) zur statischen Lagerung des Trägers (3) umfasst, wobei der Träger (3) korrespondierende Lagerelemente (9a, 9b) zur statischen Lagerung umfasst, wobei das optische System (2) ein erstes und ein weiteres Endanschlagelement (4a, 4b) umfasst, wobei der Träger (3) beweglich zwischen den Endanschlagelementen (4a, 4b) gelagert ist, wobei das erste Endanschlagelement (4a) das erste Lagerelement (8a) zur statischen Lagerung und das weitere Endanschlagelement (4b) das weitere Lagerelement (8b) zur statischen Lagerung aufweist oder ausbildet, wobei die Lagerelemente (8a, 8b, 9a, 9b) die Anschlaglagen (L1, L2) des Trägers (3) wiederholgenau festlegen, **dadurch gekennzeichnet, dass** das optische System (2) mindestens ein Arretierelement zur Arretierung des Trägers (3) in mindestens einer Anschlaglage (L1, L2) umfasst, wobei das Arretierelement zur Arretierung eines Kopplungselements (15, 17) ausgebildet ist, das zur Übertragung einer Antriebskraft von einer Antriebseinrichtung mechanisch mit dem Träger (3) gekoppelt ist.

2. Optisches System nach Anspruch 1, **dadurch gekennzeichnet, dass** eine durch das Bewegungslagerelement festgelegte Wiederholgenauigkeit einer Bewegungslage des optischen Elements (1) geringer ist als die Wiederholgenauigkeit in einer Anschlaglage (L1, L2).

3. Optisches System nach einem der vorangegangenen Ansprüche, **dadurch gekennzeichnet, dass** der Träger (3) eine Trägerplatte umfasst, wobei zum ersten Lagerelement (8a) korrespondierende Lagerelemente (9a) des Trägers auf einer ersten Seite der Trägerplatte (3) und zum weiteren Lagerelement (8b) korrespondierende Lagerelemente (9b) des Trägers (3) auf einer weiteren Seite der Trägerplatte angeordnet sind.

4. Optisches System nach einem der vorangegangenen Ansprüche, **dadurch gekennzeichnet, dass** das erste und/oder das weitere Lagerelement (8a, 8b) (ein) Element(e) eines Dreipunktlagers ist/sind.

5. Optisches System nach einem der vorangegangenen Ansprüche, **dadurch gekennzeichnet, dass** eine Antriebseinrichtung (13) über das mindestens eine Kopplungselement (15, 17) mechanisch mit dem Träger (3) gekoppelt ist, wobei mindestens ein Kopplungselement (17) als Federelement ausgebildet ist.

6. Optisches System nach Anspruch 5, **dadurch gekennzeichnet, dass** das Federelement (17) als Blattfeder ausgebildet ist oder mindestens einen Blattfederabschnitt umfasst.

7. Optisches System nach einem der Ansprüche 4 bis 6, **dadurch gekennzeichnet, dass** das Kopplungselement (17) oder ein weiteres Kopplungselement (15) als bewegungsgeführtes Kopplungselement ausgebildet ist.

8. Optisches System nach einem der Ansprüche 4 bis 7, **dadurch gekennzeichnet, dass** das mit dem Träger (3) gekoppelte Kopplungselement (17) beweglich am Träger (3) gelagert ist, wobei die Relativbewegung zwischen Träger (3) und Kopplungselement (17) begrenzt ist.

9. Optisches System nach Anspruch 8, **dadurch gekennzeichnet, dass** der Träger (3) mindestens einen Aufnahmeabschnitt (18) zur Aufnahme des Kopplungselements (17) aufweist oder ausbildet, wobei sich eine Dimension des Aufnahmeabschnitts (18) entlang seiner Mittellinie verändert.

10. Optisches System nach einem der vorangegangenen Ansprüche, **dadurch gekennzeichnet, dass** das Arretierelement eine Blattfeder (19) und ein Kugellager (20) umfasst.

11. Optisches System nach einem der vorangegangenen Ansprüche, **dadurch gekennzeichnet, dass** das optische System (2) mindestens ein Element eines elektrischen Schaltkreises umfasst oder ausbildet, der geschlossen ist, wenn sich der Träger (3) in einer der Anschlaglagen (L1, L2) befindet, und geöffnet ist, wenn sich der Träger (3) nicht in der Anschlaglage (L1, L2) befindet.

12. Optisches System nach einem der vorangegangenen Ansprüche, **dadurch gekennzeichnet, dass** eine Kraft zur Arretierung des Trägers (3) in einer Anschlaglage von dem Arretierelement auf das Kopplungselement (15, 17) ausgeübt und von diesem dann auf den Träger (3) übertragen wird.

13. Verfahren zum Betreiben eines optischen Systems (2) nach einem der Ansprüche 1 bis 12, **dadurch gekennzeichnet, dass** der Träger (3) zwischen den Anschlaglagen (L1, L2) bewegt wird.

14. Verfahren nach Anspruch 13, **dadurch gekennzeichnet, dass** nach einer Bewegung des Trägers (3) in eine Anschlaglage (L1, L2) geprüft wird, ob der Träger (3) sich in der Anschlaglage (L1, L2) befindet.

## Claims

1. Optical system, wherein the optical system (2) comprises at least one carrier (3) having at least one optical element (1), a movement bearing element for supporting the carrier (3) during a movement, at least one first bearing element and at least one further bearing element (8a, 8b) for statically supporting the carrier (3), wherein the carrier (3) comprises corresponding bearing elements (9a, 9b) for the static support, wherein the optical system (2) comprises a first and a further end stop element (4a, 4b), wherein the carrier (3) is supported movably between the end stop elements (4a, 4b), wherein the first end stop element (4a) has or forms the first bearing element (8a) for the static support and the further end stop element (4b) has or forms the further bearing element (8b) for the static support, wherein the bearing elements (8a, 8b, 9a, 9b) set the stop positions (L1, L2) of the carrier (3) with reproducible accuracy, **characterized in that** the optical system (2) comprises at least one locking element for looking the carrier (3) in at least one stop position (L1, L2), wherein the locking element is designed for locking a coupling element (15, 17) which is mechanically coupled to the carrier (3) for transmitting a driving force from a drive device.

2. Optical system according to Claim 1, **characterized in that** a reproducible accuracy of a movement bearing of the optical element (1), which reproducible accuracy is set by the movement bearing element, is lower than the reproducible accuracy in a stop position (L1, L2).

3. Optical system according to either of the preceding claims, **characterized in that** the carrier (3) comprises a carrier plate, wherein bearing elements (9a) of the carrier which correspond to the first bearing element (8a) are arranged on a first side of the carrier plate (3) and bearing elements (9b) of the carrier (3) which correspond to the further bearing element (8b) are arranged on a further side of the carrier plate.

4. Optical system according to any of the preceding claims, **characterized in that** the first and/or the further bearing element (8a, 8b) is/are an element/elements of a three-point bearing.

5. Optical system according to any of the preceding claims, **characterized in that** a drive device (13) is mechanically coupled to the carrier (3) via the at least one coupling element (15, 17), wherein at least one coupling element (17) is designed as a spring element.

6. Optical system according to Claim 5, **characterized in that** the spring element (17) is designed as a leaf spring or comprises at least one leaf spring section.

7. Optical system according to any of Claims 4 to 6, **characterized in that** the coupling element (17) or a further coupling element (15) is designed as a movement-guided coupling element.

8. Optical system according to any of Claims 4 to 7, **characterized in that** the coupling element (17) coupled to the carrier (3) is supported movably on the carrier (3), wherein the relative movement between the carrier (3) and the coupling element (17) is limited.

9. Optical system according to Claim 8, **characterized in that** the carrier (3) has or forms at least one receiving section (18) for receiving the coupling element (17), wherein one dimension of the receiving section (18) changes along its centre line.

10. Optical system according to any of the preceding claims, **characterized in that** the locking element comprises a leaf spring (19) and a ball bearing (20).

11. Optical system according to any of the preceding claims, **characterized in that** the optical system (2) comprises or forms at least one element of an electrical circuit, which is closed when the carrier (3) is in one of the stop positions (L1, L2) and is open when the carrier (3) is not in the stop position (L1, L2).

12. Optical system according to any of the preceding claims, **characterized in that** a force for locking the carrier (3) in a stop position is exerted by the locking element onto the coupling element (15, 17) and is then transmitted by the latter to the carrier (3).

13. Method for operating an optical system (2) according to any of Claims 1 to 12, **characterized in that** the carrier (3) is moved between the stop positions (L1, L2).

14. Method according to Claim 13, **characterized in that**, after a movement of the carrier (3) into a stop position (L1, L2), a check is carried out as to whether the carrier (3) is in the stop position (L1, L2).

## Revendications

1. Système optique, le système optique (2) comprenant au moins un support (3) pourvu d'au moins un élément optique (1), un élément formant palier de mouvement destiné au logement du support (3) pendant un mouvement, au moins un premier élément formant palier et au moins un autre élément formant palier (8a, 8b) destinés au logement statique du support (3), le support (3) comprenant des éléments formant paliers correspondants (9a, 9b) destinés au logement statique, le système optique (2) comprenant un premier élément de butée d'extrémité et un autre élément de butée d'extrémité (4a, 4b), le support (3) étant logé de manière mobile entre les éléments de butée d'extrémité (4a, 4b), le premier élément de butée d'extrémité (4a) comportant ou formant le premier élément formant palier (8a) destiné au logement statique et l'autre élément de butée d'extrémité (4b) comportant ou formant l'autre élément formant palier (8b) destiné au logement statique, les éléments formant palier (8a, 8b, 9a, 9b) déterminant avec une précision reproductible les positions de butée (L1, L2) du support (3), **caractérisé en ce que** le système optique (2) comporte au moins un élément de blocage destiné à bloquer le support (3) dans au moins une position de butée (L1, L2), l'élément de blocage étant conçu pour bloquer un élément d'accouplement (15, 17) qui est accouplé mécaniquement au support (3) afin de transmettre une force d'entraînement provenant d'un dispositif d'entraînement.

2. Système optique selon la revendication 1, **caractérisé en ce qu'**une précision reproductible d'une position de mouvement de l'élément optique (1) déterminée par l'élément formant palier de mouvement est inférieure à la précision reproductible dans une position de palier (L1, L2).

3. Système optique selon l'une des revendications précédentes, **caractérisé en ce que** le support (3) comprend une plaque de support, des éléments formant paliers (9a) du support, qui correspondent au premier élément formant palier (8a), étant disposés sur un premier côté de la plaque de support (3) et des éléments formant paliers (9b) du support (3), qui correspondent à l'autre élément formant palier (8b), étant disposés sur un autre côté de la plaque de support.

4. Système optique selon l'une des revendications précédentes, **caractérisé en ce que** le premier élément formant palier et/ou l'autre élément formant palier (8a, 8b) sont des paliers à trois points.

5. Système optique selon l'une des revendications précédentes, **caractérisé en ce qu'**un dispositif d'entraînement (13) est accouplé mécaniquement au support (3) par le biais de l'au moins un élément d'accouplement (15, 17), au moins un élément d'accouplement (17) étant conçu comme élément à ressort.

6. Système optique selon la revendication 5, **caractérisé en ce que** l'élément à ressort (17) est réalisé sous la forme d'un ressort à lames ou comprend au moins une portion de ressort à lames.

7. Système optique selon l'une des revendications 4 à 6, **caractérisé en ce que** l'élément d'accouplement (17) ou un autre élément d'accouplement (15) est conçu comme un élément d'accouplement à mouvement guidé.

8. Système optique selon l'une des revendications 4 à 7, **caractérisé en ce que** l'élément d'accouplement couplé (17) accouplé au support (3) est logé de manière mobile sur le support (3), le mouvement relatif entre le support (3) et l'élément d'accouplement (17) étant limité.

9. Système optique selon la revendication 8, **caractérisé en ce que** le support (3) comporte ou forme au moins une portion de réception (18) destinée à recevoir l'élément d'accouplement (17), une dimension de la portion de réception (18) variant le long de sa ligne médiane.

10. Système optique selon l'une des revendications précédentes, **caractérisé en ce que** l'élément de blocage comprend une lame à ressort (19) et un palier à billes (20) .

11. Système optique selon l'une des revendications précédentes, **caractérisé en ce que** le système optique (2) comprend ou forme au moins un élément d'un circuit électrique qui est fermé lorsque le support (3) est dans l'une des positions de butée (L1, L2) et est ouvert lorsque le support (3) n'est pas dans la position de butée (L1, L2).

12. Système optique selon l'une des revendications précédentes, **caractérisé en ce qu'**une force de blocage du support (3) dans une position de butée est exercée par l'élément de blocage sur l'élément d'accouplement (15, 17) puis est transmise de celui-ci au support (3).

13. Procédé de fonctionnement d'un système optique (2) selon l'une des revendications 1 à 12, **caractérisé en ce que** le support (3) est déplacé entre les positions de butée (L1, L2).

14. Procédé selon la revendication 13, **caractérisé en ce que**, après un mouvement du support (3) jusque dans une position de butée (L1, L2), un contrôle est effectué pour vérifier si le support (3) est dans la position de butée (L1, L2).
